# EUROPÄISCHE PATENTSCHRIFT

(11) **EP 1 159 166 B1**
(45) Veröffentlichungstag und Bekanntmachung des Hinweises auf die Patenterteilung: **06.08.2003**
(21) Anmeldenummer: 00903618.7
(22) Anmeldetag: 24.01.2000
(51) Int. Cl.: B60R 21/20

(54) **INSASSENSCHUTZVORRICHTUNG MIT EINEM LENKRADAIRBAG FÜR EIN KRAFTFAHRZEUG**
PASSENGER PROTECTION DEVICE WITH A DRIVER AIRBAG FOR A MOTOR VEHICLE
DISPOSITIF DE PROTECTION D'OCCUPANT COMPORTANT UN AIRBAG DE VOLANT POUR UN VEHICULE AUTOMOBILE

(30) Priorität: 25.02.1999 DE 19908135
(43) Veröffentlichungstag der Anmeldung: 05.12.2001
(73) Patentinhaber: Volkswagen Aktiengesellschaft, 38436 Wolfsburg (DE)
(72) Erfinder: SINNHUBER, Ruprecht, D-38518 Gifhorn (DE); WOHLLEBE, Thomas, D-38110 Braunschweig (DE)
(74) Vertreter: Liebl, Thomas, Dipl.-Ing.
(86) Internationale Anmeldenummer: EP0000500
(87) Internationale Veröffentlichungsnummer: WO00050272

(56) Entgegenhaltungen:
- EP-A- 0 415 362
- DE-A- 4 217 177
- DE-A- 19 530 346
- DE-U- 29 710 745
- US-A- 5 125 682
- PATENT ABSTRACTS OF JAPAN vol. 018, no. 177 (M-1582), 25. März 1994 (1994-03-25) & JP 05 338513 A (TOYOTA MOTOR CORP), 21. Dezember 1993 (1993-12-21)

## Beschreibung

Die Erfindung betrifft eine Insassenschutzvorrichtung mit einem Lenkradairbag für ein Kraftfahrzeug.

Eine allgemein bekannte Insassenschutzvorrichtung mit einem Lenkradairbag für ein Kraftfahrzeug umfasst ein Airbagmodul, das wenigstens einen Gasgenerator mit wenigstens einem daran angeschlossenen Lenkradairbag aufweist, wobei das Airbagmodul in einer Lenkradnabe des Lenkrads aufgenommen ist. im Nabenbereich des Lenkrads ist eine Airbag-Austrittöffnung für den sich entfaltenden Airbag vorgesehen, durch die hindurch der Airbag im Crashfall wenigstens teilweise austritt und vor dem Lenkrad aufblasbar ist. Zudem ist eine Abdeckung vorgesehen, die in einer Geschlossenstellung und Abdeckposition bei nicht aktiviertem Airbag im Nabenbereich anliegt, die Airbag-Austrittöffnung abdeckt und dort durch Haltemittel festgelegt ist. Konkret ist die Abdeckung als Airbagklappe ausgebildet, die randseitig im Bereich der Austrittöffnung angelenkt ist und die im Crashfall durch den sich aufblasenden Airbag in eine die Airbag-Austrittöffnung freigebende Freigabeposition bewegbar ist.

Trotzdem hier die Airbagklappe in der Freigabeposition mit dem Nabenbereich des Lenkrads verbunden bleibt und damit bei der Airbagaktivierung nicht unkontrolliert in den Fahrzeuginnenraum geschleudert werden kann, besteht dennoch die Möglichkeit, dass durch die sich öffnende Klappe oder die in der Freigabeposition in Richtung auf den Fahrer abstehende Airbagklappe für diesen eine gewisse Aggressivität ausgehen kann, insbesondere wenn dieser zu dicht am Lenkrad sitzt oder bei einem Aufprall und einer Volumenverminderung des Airbags mit der abstehenden Airbagklappe in Berührung kommt.

Weiter wird bei der bekannten Insassenschutzvorrichtung der Lenkradairbag ohne irgendweiche Führungsmittel in Richtung auf den Fahrer entfaltet und gefüllt, wodurch beim schnellen Aufblasen des Airbags eine gewisse Aggressivität mit der Gefahr einer Beeinträchtigung für den Fahrer ausgehen kann.

Aus der DE 42 17 177 A1 ist eine Insassenschutzvorrichtung mit einem Airbag für ein Kraftfahrzeug bekannt, die eine Airbaganordnung aus mindestens einem im Grundzustand zusammengefalteten Lenkradairbag und mindestens einem zugeordneten Gasgenerator umfasst. Weiter ist eine Airbag-Austrittöffnung für den sich entfaltenden Airbag vorgesehen, die mittels einer Abdeckung, die aus zwei relativ festen Airbagklappen besteht, abgedeckt ist und die aus einer durch Haltemittel festgelegten Abdeckposition zur Freigabe der Airbag-Austrittöffnung für einen Airbagaustritt in eine Freigabeposition bewegt werden kann. Die beiden Airbagklappen sind jeweils durch zwei beabstandete Schwenkhebel am Randbereich der Airbag-Austrittöffnung so angebunden, dass die Airbagklappen in der Freigabeposition die Airbag-Austrittöffnung freigeben.

Die Schwenkhebeln sind jeweils in Anbindungspunkten am Randbereich der Airbag-Austrittöffnung und andererseits jeweils in klappenseitigen Anbindungspunkten an der zugeordneten Airbagklappe angebunden, wobei an jeder Airbagklappe ein erster klappenseitiger Anbindungspunkt weiter zur Airbag-Austrittöffnungs-Achse hin liegt als ein weiterer klappenseitiger Anbindungspunkt, und wobei die Anordnung/Länge der einzelnen Schwenkhebel so gewählt ist, das beide Airbagklappen beim Übergang in die Freigabeposition eine im wesentlichen translatorische Bewegung nahe der Ebene der Öffnung des Gehäuses ausführen, wobei beide Airbagklappen in der Freigabeposition vollständig von der Airbag-Austrittöffnung wegverlagert sind, sodaß diese nicht in Kontakt mit dem sich entfaltenden Airbag kommen.

Konkret ist hier für eine gleiche Klappenkinematik beider Airbagklappen die Anordnung und die Länge der Schwenkhebel an den Airbagklappen jeweils gleich ausgebildet, so dass beide Abdeckklappen bei der Öffnungsbewegung eine im Wesentlichen translatorische Bewegung nahe der Ebene der Öffnung des Gehäuses ausführen. Die Airbagklappen sind hier in der Freigabeposition vollständig von der Airbag-Austrittöffnung wegverlagert, so dass diese nicht in Kontakt mit dem sich entfaltenden aufblasenden Airbag kommen. Mit einem derartigen Aufbau soll vermieden werden, dass die geöffneten Airbagklappen mit einem freien Rand in Richtung zum Fahrzeuginsassen hin weisen. Ein radiales Verschwenken der Airbagklappen ist hier nicht vorgesehen und unerwünscht. Zudem findet auch hier das Aufblasen des Airbags ohne irgendwelche Führungsmittel statt.

Weiter ist aus der US 5,125,682 eine Insassenschutzvorrichtung mit einem Lenkradairbag für ein Kraftfahrzeug bekannt, bei der eine eine Airbag-Austrittöffnung verschließende Abdeckung im Falle der Aktivierung der Insassenschutzvorrichtung vom Nabenbereich vollständig abgehoben wird, wobei die Abdeckung durch zwei gleich lange Bänder zurückgehalten wird und der Airbag um die abgehobene und sich im Abstand zur Nabe befindliche Abdeckung herum aufgeblasen wird.

Weiter sind aus der DE 297 10 745 U1, der DE 195 30 346 A1, der EP 0 415 362 A2 sowie den Patent Abstracts of Japan zu der JP 05338513 A jeweils Aufbauten mit Klappen oder Abdeckungen bekannt, die über herkömmliche Fangbänder gehalten sind. Nachteilig bei diesen Aufbauten ist, wie dies beispielsweise aus der EP 0 415 362 A2 ersichtlich ist, dass die Fangbänder hier an jeder Airbagklappe randseitig angebunden sind und einen jeweils gleichen Abstand zum Angrenzungsbereich der beiden Airbagklappen aufweisen, so dass diese um ihre volle Länge in den Innenraum schwenken und dadurch in unerwünschter Weise die Gefahr von Beeinträchtigungen für die Insassen gegeben ist. Auch hier wird der Airbag somit ohne irgendwelche Führungsmittel entfaltet und gefüllt.

Aufgabe der Erfindung ist es daher, einen alternativen Aufbau einer Insassenschutzvorrichtung mit einem Lenkradairbag für ein Kraftfahrzeug zu schaffen, mit dem auf einfache Weise ein gezielt geführter Austritt des Airbags aus dem Nabenbereich möglich ist und mit dem die Gefahr einer Beeinträchtigung eines Fahrers durch die sich öffnenden Airbagklappen reduziert ist.

Diese Aufgabe wird gelöst mit den Merkmalen des Patentanspruchs 1.

Gemäß Anspruch 1 umfasst eine Insassenschutzvorrichtung mit einem Lenkradairbag für ein Kraftfahrzeug eine Airbaganordnung, die mindestens einen im Grundzustand zusammengefalteten Lenkradairbag und mindestens einen zugeordneten Gasgenerator aufweist. Eine Airbag-Austrittöffnung für den sich entfaltenden Airbag ist im Nabenbereich des Lenkrads ausgebildet. Ferner ist eine Abdeckung für die Airbag-Austrittöffnung vorgesehen, die aus zwei relativ festen Airbagklappen besteht, die aus einer durch Haltemittel festgelegten Abdeckposition zur Freigabe der Airbag-Austrittöffnung für einen Airbagaustritt in eine Freigabeposition bewegbar sind. Weiter sind wenigstens zwei jeder Airbagklappe zugeordnete Verbindungsbänder und/oder Schwenkhebel vorgesehen, die einerseits jeweils in nabenseitigen Anbindungspunkten am Randbereich der Airbag-Austrittöffnung und andererseits jeweils in klappenseitigen Anbindungspunkten an der zugeordneten Airbagklappe angebunden sind, wobei an jeder Airbagklappe ein erster klappenseitiger Anbindungspunkt weiter zur Nabenachse hin liegt als wenigstens ein weiterer klappenseitiger Anbindungspunkt. Die Anordnung und/oder die Länge der Verbindungsbänder und/oder Schwenkhebel an wenigstens einer der Airbagklappen ist unterschiedlich so gewählt, dass diese wenigstens eine Airbagklappe beim Übergang in die Freigabeposition in etwa radial verschwenkbar und in der Freigabeposition so ausrichtbar ist, dass diese als Führung für eine gezielte Austrittrichtung des Airbags dient.

Vorteilhaft wird mit einem derartigen Aufbau, bei dem wenigstens eine in etwa radial verschenkbare Airbagklappe in der Freigabeposition so ausrichtbar ist, dass diese als Führung dienen kann, indem sie z. B. mit einem Teilbereich in den Entfaltungsbereich des Airbags ragt, ein gezielter Airbagaustritt mit gezielter Airbagausrichtung, insbesondere auf den Thorax eines Fahrers, möglich. Durch die Anbindung mittels wenigstens zweier Verbindungsbänder und/oder Schwenkhebel ist dabei sichergestellt, dass die Airbagklappe für eine sichere Führung während des Aufblasens sehr gut in ihrer radial verschwenkten Position gehalten werden kann, da diese nicht undefiniert wegklappen kann. Durch einen solchen gezielt geführten Airbagaustritt kann die Schutzfunktion des Airbags insgesamt erhöht und dessen Aggressivität gegenüber dem Fahrer verringert werden. Dabei wird durch den weiter zur Nabenachse hin liegenden Anbindungspunkt in Verbindung mit dem wenigstens einen weiteren Anbindungspunkt zudem vorteilhaft erreicht, dass die Airbagklappen nicht um ihre volle Länge in den Innenraum verschwenkt werden, wie dies bei einer lediglich randseitigen Anbindung an der Airbagklappe der Fall wäre, sondem die Freigabebewegung relativ nahe im Bereich der Airbag-Austrittöffnung erfolgt, so dass die radial verschwenkte Klappe nach wie vor im Lenkradbereich liegt. Obwohl hier somit Kanten der radial verschwenkten Airbagklappen in Richtung zum Fahrzeuginnenraum abstehen, ist hierdurch aufgrund der eben geschilderten erfindungsgemäßen Anbindung und Öffnung der Airbagklappen im austrittöffnungsnahen Bereich die Gefahr einer Beeinträchtigung des Fahrers nicht gegeben.

Die Verbindungsbänder können z. B. aus unterschiedlichen, reißfesten Materialien, insbesondere aus Kunststoff oder aus Metalldraht hergestellt sein. Die Schwenkhebel können z. B. aus Kunststoff oder Metall hergestellt sein.

Die Verbindungsbänder können zudem vorteilhaft auch als Fangbänder dienen, wodurch vermieden wird, dass die wenigstens eine Airbagklappe unkontrolliert in den Fahrgastinnenraum geschleudert wird.

In einer bevorzugten Ausführungsform mit besonders bevorzugter Öffnungskinematik ist vorgesehen, dass die Anbindungspunkte der Verbindungsbänder an der Airbagklappe weiter zur Nabenachse hin liegen als die Anbindungspunkte an der Airbag-Austrittöffnung. Dadurch wird beim Airbagaustritt eine besonders vorteilhafte radial in der Nabenquerebene liegende, nach außen strebende Klappenöffnung erzwungen, die ggf. mit einer Aufklappöffnung bei entsprechender Auslegen der Verbindungsbänder kombinierbar ist.

Um ein schnelles Öffnen der Klappe mit der gewünschten Kinematik zu erreichen, kann der durch den Airbag eingeleitete Öffnungsvorgang zusätzlich noch durch Federkraft unterstützt werden. Dazu sind entsprechende Federn vorzusehen.

Zweckmäßig wird die wenigstens eine Airbagklappe in ihrer Abdeckposition bei nicht aktiviertem Airbag mittels einer durch die Entfaltung des Airbags aufreißbaren Vorkerbung und/oder einen Form- und Klemmschluss als Haltemittel festgelegt. In einer konkreten, bevorzugten Ausführungsform sind dabei zwei halbkreisförmige Airbagklappen vorgesehen, die in der Abdeckposition an einer vorgekerbten Aufreissnut zu einer kreisförmigen Abdeckung für den Nabenbereich verbunden sind. Die Aufreissnut liegt dabei an einer Durchmesserlinie der kreisförmigen Abdeckung. Eine solche Anordnung aus zwei halbkreisförmigen Airbagklappen ergibt eine günstige Öffnungskinematik bei reduzierter Aggressivität und der Möglichkeit einer geeigneten Austrittführung für den Airbag.

Je nach den fahrzeugindividuellen Gegebenheiten kann es zweckmäßig sein, eine solche Aufreissnut bei einer Lenkradgrundstellung ohne Lenkradeinschlag vertikal oder horizontal anzuordnen.

Je nach den Erfordernissen und der gewünschten Klappenkinematik können jeweils für eine Airbagklappe auch drei oder mehr Verbindungsbänder verwendet werden.

In einer vorteilhaft kompakten Anordnung werden ein Airbag und ein Gasgenerator in einem Airbagmodul zusammengefasst, das im Nabenbereich des Lenkrads angebracht ist. Bei einer solchen Ausführung kann vorteilhaft die Anbindung der Verbindungsbänder auch unmittelbar am Randbereich des Airbagmoduls erfolgen.

Anhand einer Zeichnung wird die Erfindung näher erläutert.

Es zeigen:
- Fig. 1: einen schematischen Querschnitt durch ein Lenkrad mit einem Lenkradairbag für ein Kraftfahrzeug sowie mit durch Verbindungsbänder gehaltenen Airbagklappen,
- Fig. 2: eine schematische Darstellung einer Insassenschutzvorrichtung an einem Lenkrad mit durch die Airbagklappen hergestellter, gezielter Austrittrichtung,
- Fig. 3: eine schematische Draufsicht auf ein Lenkrad in einer Lenkradgrundstellung mit vertikal verlaufender Aufreissnut, und
- Fig. 4: eine schematische Draufsicht auf ein Lenkrad in einer Lenkradgrundstellung mit einer horizontal verlaufenden Aufreissnut.

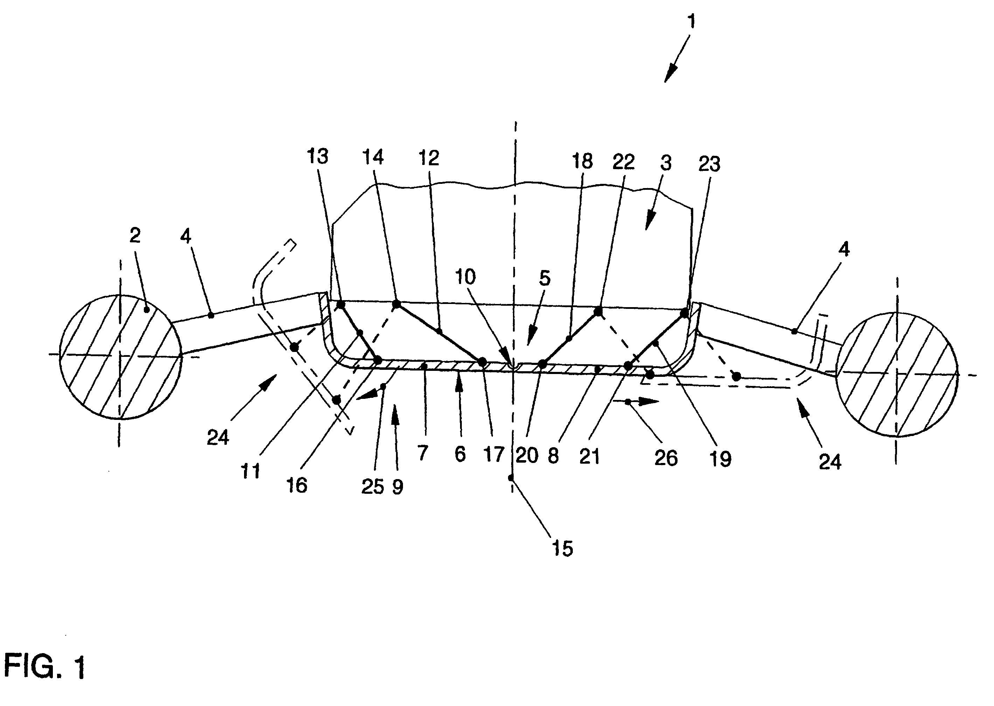

In der Fig. 1 ist schematisch ein Querschnitt durch ein Lenkrad 1 eines Kraftfahrzeugs mit darin integrierter Insassenschutzvorrichtung dargestellt. Das Lenkrad 1 ist aus einem Lenkradkranz 2 sowie einer zentral im Lenkradkranz 2 angeordneten Lenkradnabe 3 aufgebaut, die über Lenkradspeichen 4 miteinander verbunden sind.

Ein in der Fig. 1 nicht dargestelltes Airbagmodul, bestehend aus einem im Grundzustand zusammengefalteten Lenkradairbag und einem zugeordneten Gasgenerator, ist im Nabenbereich des Lenkrads 1 angeordnet. Im Nabenbereich des Lenkrads 1 ist ferner eine Airbag-Austrittöffnung 5 für den sich im Crashfall entfaltenden Airbag ausgebildet. Diese Airbag-Austrittöffnung 5 ist im Grundzustand, bei nicht aktiviertem Airbag mittels einer Abdeckung 6 verschlossen.

Wie dies aus der Fig. 3, die eine Draufsicht auf das Lenkrad nach Fig. 1 zeigt, ersichtlich ist, besteht die Abdeckung 6 aus zwei halbkreisförmigen Airbagklappen 7, 8, die in der in der Fig. 3 dargestellten Abdeckposition an einer vorgekerbten Aufreissnut 10 zu einer kreisförmigen Abdeckung für den Nabenbereich verbunden sind.

Wie dies aus der Fig. 3 weiter ersichtlich ist, verläuft die Aufreissnut 10 entlang einer Durchmesserlinie der kreisförmigen Abdeckung 6, wobei die Aufreissnut 10 bei einer Lenkradgrundstellung ohne Lenkradeinschlag zudem vertikal liegt. In einer alternativen Ausführungsform kann die Aufreissnut bei einer Lenkradgrundstellung ohne Lenkradeinschlag gemäß der Darstellung der Fig. 4 horizontal angeordnet sein.

Wie dies aus der Fig. 1 weiter ersichtlich ist, ist die erste, halbkreisförmige Airbagklappe 7 durch zwei voneinander beabstandete und in ihrer Länge unterschiedlich dimensionierte Verbindungsbänder 11, 12 am Randbereich der Airbag-Austrittöffnung 5 verbunden. In dieser in der Fig. 1 dargestellten Abdeckposition 9 liegen die Anbindungspunkte 16, 17 der Verbindungsbander 11, 12 an der Airbagklappe 7 weiter zur Nabenachse 15 hin als die Anbindungspunkte 13, 14 an der Airbag-Austrittöffnung 5.

Weiter kann der Fig. 1 entnommen werden, dass die Airbagkiappe 8 durch zwei voneinander beabstandete und in ihrer Länge gleich dimensionierte Verbindungsbänder 18, 19 am Randbereich der Airbag-Austrittöffnung 5 verbunden ist. Die Anbindungspunkte 20, 21 der Verbindungsbänder 18, 19 an der Airbagklappe 8 liegen weiter zur Nabenachse 15 hin als die Anbindungspunkte 22, 23 an der Airbag-Austrittöffnung 5.

Im Crashfall wird durch den sich entfaltenden Airbag 27 ein Druck auf die Abdeckung 6 ausgeübt. wodurch diese entlang ihrer Aufreissnut 10 aufreißt und die Airbagklappen 7, 8 in ihre in der Fig. 1 strichliert eingezeichnete Freigabeposition 24 überführt werden.

Mit der in der Fig. 1 dargestellten Anordnung und Dimensionierung der Verbindungsbänder 11, 12 bzw. 18, 19 der Airbagklappen 7, 8 wird erreicht, dass die Airbagklappe 7 beim Übergang in die Freigabeposition 24 in etwa radial verschwenkt wird, wie dies durch den Pfeil 25 dargestellt ist. Dagegen wird die Airbagklappe 8 beim Übergang in die Freigabeposition 24 im wesentlichen linear verschoben, wie dies in der Darstellung der Fig. 1 durch den Pfeil 26 dargestellt ist.

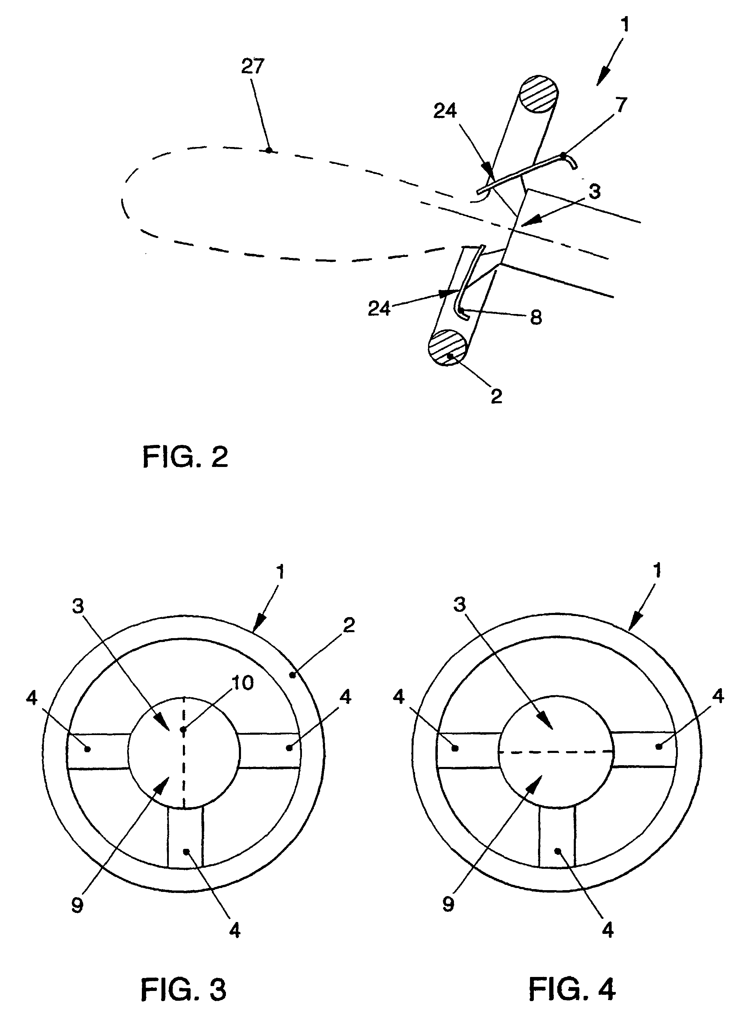

In dieser Freigabeposition 24 der Airbagklappen 7, 8, bei der die Verbindungsbänder 11, 12 bzw. 18, 19 durch den sich aufblasenden Airbag 27 gespannt sind, wird eine Führung des sich entfaltenden Airbags 27 mit einer gezielten Austrittrichtung auf den Thorax eines Fahrers erzielt, wie dies in der Fig.2 schematisch dargestellt ist.

## Patentansprüche

1. Insassenschutzvorrichtung mit einem Lenkradairbag für ein Kraftfahrzeug,
mit einer Airbaganordnung, die mindestens einen im Grundzustand zusammengefalteten Lenkradairbag (27) und mindestens einen zugeordneten Gasgenerator umfasst,
mit einer Airbag-Austrittöffnung (5) für den sich entfaltenden Airbag (27) im Nabenbereich des Lenkrads (1),
mit einer Abdeckung (6) für die Airbag-Austrittöffnung (5), die aus zwei relativ festen Airbagklappen (7, 8) besteht, die aus einer durch Haltemittel festgelegten Abdeckposition (9) zur Freigabe der Airbag-Austrittöffnung (5) für einen Airbagaustritt in eine Freigabeposition (24) bewegbar sind,
mit wenigstens zwei jeder Airbagklappe (7, 8) zugeordneten Verbindungsbändem (11, 12, 18, 19) und/oder Schwenkhebeln, die einerseits jeweils in nabenseitigen Anbindungspunkten (13, 14, 22, 23) am Randbereich der Airbag-Austrittöffnung (5) und andererseits jeweils in klappenseitigen Anbindungspunkten (16, 17, 20, 21) an der zugeordneten Airbagklappe (7, 8) angebunden sind, wobei an jeder Airbagklappe (7, 8) ein erster klappenseitiger Anbindungspunkt (17, 20) weiter zur Nabenachse (15) hin liegt als wenigstens ein weiterer klappenseitiger Anbindungspunkt (16, 21), und
wobei die Anordnung und/oder die Länge der einzelnen Verbindungsbänder (11, 12, 18, 19) und/oder Schwenkhebel an wenigstens einer der beiden Airbagklappen (7) unterschiedlich so gewählt ist, dass diese wenigstens eine Airbagklappe (7) beim Übergang in die Freigabeposition (24) in etwa radial verschwenkbar und in der Freigabeposition (24) so ausrichtbar ist, dass sie als Führung für eine gezielte Austrittrichtung des Airbags dient.

2. Insassenschutzvorrichtung nach Anspruch 1, **dadurch gekennzeichnet, dass** die Anordnung und/oder die Länge der Verbindungsbänder (11, 12, 18, 19) und/oder der Schwenkhebel bezüglich beider Airbagklappen (7, 8) für eine unterschiedliche Klappenkinematik unterschiedlich so gewählt ist, dass beim Übergang der Airbagklappen (7, 8) in die Freigabeposition (24) eine Airbagklappe (7) in etwa radial verschwenkbar und die andere Airbagklappe (8) im Wesentlichen linear verschiebbar ist zur Ausbildung einer radial in der Nabenquerebene liegenden, nach außen strebenden Klappenöffnung als Führung für eine gezielte Austrittrichtung des Airbags.

3. Insassenschutzvorrichtung nach Anspruch 1, **dadurch gekennzeichnet, dass** die Anordnung und/oder die Länge der Verbindungsbänder und/oder der Schwenkhebel bezüglich beider Airbagklappen für eine gleiche Klappenkinematik jeweils gleich so gewählt ist, dass diese beim Übergang in die Freigabeposition beide in etwa radial verschwenkbar sind.

4. Insassenschutzvorrichtung nach einem der Ansprüche 1 bis 3, **dadurch gekennzeichnet, dass** die Anbindungspunkte (16, 17, 20, 21) der Verbindungsbänder (11, 12, 18, 19) an der Airbagklappe (7, 8) weiter zur Nabenachse (15) hin liegen als die Anbindungspunkte (13, 14, 22, 23) an der Airbag-Austrittöffnung (5).

5. Insassenschutzvorrichtung nach einem der Ansprüche 1 bis 4, **dadurch gekennzeichnet, dass** die wenigstens eine Airbagklappe (7, 8) in der Abdeckposition (9) durch eine über die Entfaltung des Airbags (27) aufreißbare Vorkerbung (10) und/oder einen Form- und Klemmschluss als Haltemittel festgelegt ist.

6. Insassenschutzvorrichtung nach einem der Ansprüche 1 bis 5, **dadurch gekennzeichnet, dass** das Öffnen der Airbagklappe (7, 8) durch den Airbag (27) zusatzlich durch Federkraft unterstützt wird.

7. Insassenschutzvorrichtung nach Anspruch 5 oder Anspruch 6, **dadurch gekennzeichnet, dass** zwei halbkreisförmige Airbagklappen (7, 8) vorgesehen sind, die in der Abdeckposition (9) an einer vorgekerbten Aufreissnut (10) zu einer kreisförmigen Abdeckung (6) für den Nabenbereich verbunden sind, wobei die Aufreissnut (10) an einer Durchmesserfinie der kreisförmigen Abdeckung (6) liegt.

8. Insassenschutzvorrichtung nach Anspruch 7, **dadurch gekennzeichnet, dass** bei einer Lenkradgrundstellung ohne Lenkradeinschlag die Aufreissnut (10) vertikal oder horizontal liegt.

9. Insassenschutzvorrichtung nach einem der Ansprüche 1 bis 8, **dadurch gekennzeichnet, dass** für eine Festlegung einer Freigabeposition (24) einer Airbagklappe (7, 8) drei oder mehr Verbindungsbänder verwendet sind.

10. Insassenschutzvorrichtung nach einem der Ansprüche 1 bis 9, **dadurch gekennzeichnet, dass** die Airbaganordnung aus dem mindestens einen Airbag und dem mindestens einen Gasgenerator ein Airbagmodul ist.

11. Insassenschutzvorrichtung nach Anspruch 10, **dadurch gekennzeichnet, dass** die Anbindung der Verbindungsbänder (11, 12, 18, 19) und/oder Schwenkhebel am Randbereich des Airbagmoduls erfolgt.

## Claims

1. Occupant protection device having a steering wheel airbag for a motor vehicle,
having an airbag arrangement which comprises at least one steering wheel airbag (27), which is folded together in the normal state, and at least one associated gas generator,
having an airbag outlet opening (5) for the deploying airbag (27) in the hub region of the steering wheel (1),
having a covering (6) for the airbag outlet opening (5), said covering consisting of two relatively firm airbag flaps (7, 8) which can be moved from a covering position (9), which is secured by retaining means, into a release position (24) for releasing the airbag outlet opening (5) to let out the airbag,
having at least two connecting straps (11, 12, 18, 19) and/or pivoting levers which are assigned to each airbag flap (7, 8) and are connected on one side in respective hub-side connecting points (13, 14, 22, 23) on the edge region of the airbag outlet opening (5) and on the other side in respective flap-side connecting points (16, 17, 20, 21) on the assigned airbag flap (7, 8), in which case on each airbag flap (7, 8) a first, flap-side connecting point (17, 20) lies closer to the hub axis (15) than at least one further flap-side connecting point (16, 21), and
the arrangement and/or the length of the individual connecting straps (11, 12, 18, 19) and/or pivoting lever on at least one of the two airbag flaps (7) being selected to differ in such a manner that this at least one airbag flap (7) can be pivoted approximately radially during the transfer into the release position (24) and in the release position (24) can be aligned in such a manner that it serves as a guide for a specific outlet direction of the airbag.

2. Occupant protection device according to Claim 1, **characterized in that** the arrangement and/or the length of the connecting straps (11, 12, 18, 19) and/or of the pivoting levers with regard to both airbag flaps (7, 8) is selected to differ, so as to give a different flap kinematic arrangement, in such a manner that during the transfer of the airbag flaps (7, 8) into the release position (24) one airbag flap (7) can be pivoted approximately radially and the other airbag flap (8) can be displaced essentially linearly, in order to form a flap opening which lies radially in the hub transverse plane and pushes outward, as a guide for a specific outlet direction of the airbag.

3. Occupant protection device according to Claim 1, **characterized in that** the arrangement and/or the length of the connecting straps and/or of the pivoting levers with regard to both airbag flaps is selected in each case to be identical, so as to give an identical flap kinematic arrangement, in such a manner that, during the transfer into the release position, said flaps can both be pivoted approximately radially.

4. Occupant protection device according to one of Claims 1 to 3, **characterized in that** the connecting points (16, 17, 20, 21) of the connecting straps (11, 12, 18, 19) on the airbag flap (7, 8) lie closer to the hub axis (15) than the connecting points (13, 14, 22, 23) on the airbag outlet opening (5).

5. Occupant protection device according to one of Claims 1 to 4, **characterized in that** the at least one airbag flap (7, 8) is secured in the covering position (9) by an initial notch (10) which can be torn open by the deployment of the airbag (27) and/or by a form-fitting and clamping closure as retaining means.

6. Occupant protection device according to one of Claims 1 to 5, **characterized in that** the opening of the airbag flap (7, 8) by the airbag (27) is additionally assisted by spring force.

7. Occupant protection device according to Claim 5 or Claim 6, **characterized in that** two semicircular airbag flaps (7, 8) are provided which are connected in the covering position (9) at an initially notched tear-open groove (10) to form a circular covering (6) for the hub region, the tear-open groove (10) lying on a diameter line of the circular covering (6).

8. Occupant protection device according to Claim 7, **characterized in that**, in a normal position of the steering wheel where it is not at an angle, the tear-open groove (10) lies vertically or horizontally.

9. Occupant protection device according to one of Claims 1 to 8, **characterized in that** three or more connecting straps are used for securing a release position (24) of an airbag flap (7, 8).

10. Occupant protection device according to one of Claims 1 to 9, **characterized in that** the airbag arrangement comprising the at least one airbag and the at least one gas generator is an airbag module.

11. Occupant protection device according to Claim 10, **characterized in that** the connecting straps (11, 12, 18, 19) and/or pivoting levers are connected to the edge region of the airbag module.

## Revendications

1. Dispositif de protection d'occupant comportant un airbag de volant pour un véhicule automobile, avec un agencement d'airbag qui comprend au moins un airbag de volant (27) replié dans l'état de base et au moins un générateur de gaz associé, avec une ouverture de sortie d'airbag (5) pour l'airbag se déployant (27) dans la région du moyeu du volant de direction (1),
avec un recouvrement (6) pour l'ouverture de sortie d'airbag (5), qui se compose de deux volets d'airbag relativement fixes (7, 8) qui peuvent se déplacer hors d'une position de recouvrement (9) fixée par des moyens de retenue en vue de libérer l'ouverture de sortie d'airbag (5) pour une sortie de l'airbag dans une position de libération (24),
avec au moins deux bandes de connexion (11, 12, 18, 19) et/ou leviers de pivotement associés à chaque volet d'airbag (7, 8), qui sont reliés d'une part à chaque fois dans des points de liaison du côté du moyeu (13, 14, 22, 23) au niveau de la partie du bord de l'ouverture de sortie d'airbag (5) et d'autre part à chaque fois dans des points de liaison du côté des volets (16, 17, 20, 21) sur le volet d'airbag associé (7, 8), un premier point de liaison (17, 20) du côté des volets se trouvant sur chaque volet d'airbag (7, 8) plus loin de l'axe du moyeu (15) qu'au moins un autre point de liaison du côté des volets (16, 21), et
dans lequel l'agencement et/ou la longueur des bandes de connexion individuelles (11, 12, 18, 19) et/ou des leviers de pivotement sur au moins l'un des deux volets d'airbag (7) est choisie différemment de telle sorte que cet au moins un volet d'airbag (7), lors du passage dans la position de libération (24) puisse pivoter approximativement radialement et puisse être orienté dans la position de libération (24) de telle sorte qu'il serve de guidage pour une direction de sortie spécifique de l'airbag.

2. Dispositif de protection d'occupant selon la revendication 1, **caractérisé en ce que** l'agencement et/ou la longueur des bandes de connexion (11, 12, 18, 19) et/ou des leviers de pivotement par rapport aux deux volets d'airbag (7, 8) est choisie différemment pour une cinématique différente des clapets de telle sorte que lors du passage des volets d'airbag (7, 8) dans la position de libération (24), un volet d'airbag (7) puisse pivoter approximativement radialement et l'autre volet d'airbag (8) puisse être déplacé essentiellement linéairement pour créer une ouverture de volet se trouvant radialement dans le plan transversal du moyeu, tendant vers l'extérieur, servant de guidage pour une direction de sortie spécifique de l'airbag.

3. Dispositif de protection d'occupant selon la revendication 1, **caractérisé en ce que** l'agencement et/ou la longueur des bandes de connexion et/ou des leviers de pivotement par rapport aux deux volets d'airbag est choisie à chaque fois identique pour une. cinématique identique de telle sorte que lors du passage dans la position de libération, ceux-ci puissent tous deux être pivotés approximativement radialement.

4. Dispositif de protection d'occupant selon l'une quelconque des revendications 1 à 3, **caractérisé en ce que** les points de liaison (16, 17, 20, 21) des bandes de connexion (11, 12, 18, 19) sur le volet d'airbag (7, 8) se trouvent plus loin de l'axe du moyeu (15) que les points de liaison (13, 14, 22, 23) sur l'ouverture de sortie d'airbag (5).

5. Dispositif de protection d'occupant selon l'une quelconque des revendications 1 à 4, **caractérisé en ce que** l'au moins un volet d'airbag (7, 8) est fixé dans la position de recouvrement (9) par un pré-entaillage (10) pouvant être déchiré par le déploiement de l'airbag (27) et/ou par une fermeture par emboîtement et serrage servant de moyen de retenue.

6. Dispositif de protection d'occupant selon l'une quelconque des revendications 1 à 5, **caractérisé en ce que** l'ouverture du volet d'airbag (7, 8) par l'airbag (27) est supportée en outre par la force d'un ressort.

7. Dispositif de protection d'occupant selon la revendication 5 ou la revendication 6, **caractérisé en ce que** l'on prévoit deux volets d'airbag de forme semi-circulaire (7, 8) qui sont connectés dans la position de recouvrement (9) sur une rainure de déchirure pré-entaillée (10) pour former un recouvrement de forme circulaire (6) pour la région du moyeu, la rainure de déchirure (10) se trouvant sur une ligne diamétrale du recouvrement de forme circulaire (6).

8. Dispositif de protection d'occupant selon la revendication 7, **caractérisé en ce que** pour une position de base du volant de direction sans braquage du volant de direction, la rainure de déchirure (10) est verticale ou horizontale.

9. Dispositif de protection d'occupant selon l'une quelconque des revendications 1 à 8, **caractérisé en ce que** pour l'établissement d'une position de libération (24) d'un volet d'airbag (7, 8), on utilise trois bandes de connexion ou plus.

10. Dispositif de protection d'occupant selon l'une quelconque des revendications 1 à 9, **caractérisé en ce que** l'agencement d'airbag est un module d'airbag constitué d'au moins un airbag et de l'au moins un générateur de gaz.

11. Dispositif de protection d'occupant selon la revendication 10, **caractérisé en ce que** la liaison des bandes de connexion (11, 12, 18, 19) et/ou des leviers de pivotement s'effectue sur la région de bord du module d'airbag.
